# EUROPÄISCHE PATENTSCHRIFT

(11) **EP 1 481 579 B1**
(45) Veröffentlichungstag und Bekanntmachung des Hinweises auf die Patenterteilung: **01.04.2015**
(21) Anmeldenummer: 04012008.1
(22) Anmeldetag: 21.05.2004
(51) Int. Cl.: A01B 15/02, A01B 15/08

(54) **Pflugkörper mit Streichblech**
Plough body with mouldboard
Corps de charrue avec versoir

(30) Priorität: 28.05.2003 DE 10324239
(43) Veröffentlichungstag der Anmeldung: 01.12.2004
(73) Patentinhaber: Lemken GmbH & Co. KG, 46519 Alpen (DE)
(72) Erfinder: Hönnekes, Ernst, 47652 Weeze (DE); Meurs, Wilhelm, 46519 Alpen (DE); Jochums, Dieter, 47199 Duisburg (DE); Gelen, Lars, 47495 Rheinberg (DE); de Vries, Ruud, 6543 PP Nijmegen (NL)
(74) Vertreter: Schulte, Jörg

(56) Entgegenhaltungen:
- EP-A- 0 923 851
- DE-A- 19 833 122
- GB-A- 1 202 720
- US-A- 2 913 060
- US-A- 5 172 770
- US-A- 5 427 186

## Beschreibung

Die Erfindung betrifft Die Erfindung betrifft einen Pflugkörper mit Streichblech gemäß dem Oberbegriff des Patentanspruches 1.

Ein derartiger Pflugkörper mit Streichblech wurde bereits in der niederländischen Fachzeitschrift Boerderij 75 - no. 16 vom 16. Januar 1990 auf der Seite 79 erwähnt. Der dort auf der Seite 79 dargestellte Pflugkörper weist ein Streichblech auf, das im vorderen Bereich mit Keramiksegmenten beschichtet ist. Die Keramiksegmente sind aufgeklebt und ihre Kontur stimmt nicht mit der Kontur des Streichbleches überein. Diese Ausführungsform eines mit Keramiksegmenten beschichteten Streichbleches ist sehr aufwendig und teuer, da die Keramiksegmente einzeln auf das Streichblech aufgeklebt werden müssen. Zusätzlich kann mit einem derartigen Streichblech nicht störungsfrei gearbeitet werden, da die Kontur der aus den Keramiksegmenten bestehenden Keramikschicht nicht mit der Kontur des Streichbleches selbst übereinstimmt. Es bilden sich dadurch Vertiefungen, in der sich Erde festsetzen kann, die bei klebrigen Bodenverhältnissen schnell zum Zusetzen des Pflugkörpers führt. Überstehende Keramikecken brechen leicht ab, was zusätzlich zu Funktionsbeeinträchtigungen führt. Aus der GB 1 202 720 A ist ein Pflugkörper mit einem Streichblech bekannt, das aus mindestens drei Streichblechstreifen besteht. von diesen Streichblechstreifen ist mindestens einer weitgehend mit einer Keramikschicht (Keramikplättchen) versehen. Wie diese Keramikschicht auf den/oder die Streichblechstreifen aufzubringen ist, ist nicht offenbart, wobei davon auszugehen ist, dass die einzelnen Keramikplättchen einzeln auf den Streichblechstreifen aufgeklebt werden müssen, was sehr arbeitsintensiv ist.

Der Erfindung liegt die Aufgabe zugrunde, einen Pflugkörper mit Streichblech zu schaffen, bei dem die zuvor genannten Zusatzprobleme und Funktionsbeeinträchtigungen nicht auftreten können, der kostengünstiger hergestellt werden kann, der höhere Standzeiten aufweist und bei dem eine Beschädigung der Keramikkomponenten sicher vermieden wird.

Diese Aufgabe wird erfindungsgemäß durch die Merkmale des kennzeichnenden Teils des Patentanspruches 1 gelöst.

Dadurch, dass das Streichblech mehrteilig ausgebildet ist und Streichblechstreifen aufweist, können in bekannter Weise einzelne Streifen und sonstige Komponenten unabhängig von einander bei Verschleiß ausgetauscht werden. Durch das Vorsehen der Keramikschicht auf den Streichblechstreifen wird zum einen der Verschleiß der Streichblechstreifen reduziert, die ja bekanntlich mit einem höheren Flächendruck arbeiten müssen als ganzteilige Streichbleche, und zum anderen wird auch der Reibwert zwischen dem Streichblech und dem über die Arbeitsfläche des Streichbleches gleitenden Bodens reduziert, was zu weniger Zugkraftbedarf und zu Kraftstoffeinsparungen führt. Da im Extremfall nur der Streichblechstreifen mit einer Keramikschicht beschichtet wird, der dem größten Verschleiß unterworfen ist, erhöht sich die Standzeit des gesamten Streifenkörpers erheblich, aber nur mit geringstem Materialaufwand. Die Keramikschicht besteht aus mosaikförmig zueinander angeordneten einzelnen Keramiksegmenten und die Keramiksegmente sind in Gruppen auf dem jeweiligen Streichblechstreifen aufklebbar ausgebildet. Dadurch wird die Verarbeitung wesentlich vereinfacht und die genaue Positionierung der einzelnen Plättchen zu einer Gesamtbeschichtung deutlich verbessert. Weiter können durch die mosaikförmige Anordnung der Keramikelemente diese trotz ihrer Härte nicht brechen, wenn ein Streichblechstreifen sich während der Arbeit im elastischen Bereich verformt, z.B. bei Auftreffen auf einen Stein. Weiter sind die Keramiksegmente auf einer Folie sortiert und geordnet angeordnet und mit der Seite, die der Folie gegenüberliegt, auf dem jeweiligen Streichblechstreifen aufklebbar oder auftragbar ausgebildet. Die einzelnen Keramikelemente können bereits im Herstellerwerk so vorgefertigt werden, dass sie als Gruppen in einem oder wenigen Klebevorgängen auf einen Streichblechstreifen aufgebracht werden können. Dies verkürzt den Beschichtungsvorgang erheblich und verringert den Arbeitsaufwand.

Weiter können vier Streichblechstreifen vorgesehen und mindestens die drei unteren Streichblechstreifen mit Keramiksegmenten versehen sein. Da in der Regel der oberste Streichblechstreifen einem sehr geringen Verschleiß unterworfen ist, kann dort notfalls auf die relativ teuere Keramikbeschichtung verzichtet werden. Dies reduziert insgesamt die Kosten für die Herstellung eines Pflugkörpers mit Streichblechstreifen. Dass je nach den erwarteten Bodenverhältnissen bei erhöhtem Verschleiß auch beim oberen Streifen die Keramikbeschichtung vorgesehen ist, sieht die Erfindung selbstverständlich auch vor.

Weiter sieht die Erfindung vor, dass sowohl die Streichblechstreifen als auch die Keramiksegmente rechteckig und die Streichblechstreifen hinsichtlich der Breite und Länge um ein Mehrfaches breiter und länger als die Keramiksegmente ausgebildet sind. Durch diese Maßnahme wird sichergestellt, dass die Keramiksegmente hinsichtlich der Kontur ohne schneiden zu müssen auf den Streichblechstreifen aufgeklebt werden können, so dass keine Funktionsbeeinträchtigungen auftreten können. Dabei sieht die Erfindung vor, dass entweder ein Streichblechstreifen hinsichtlich der Länge und Breite auf die Keramiksegmente oder die Keramiksegmente hinsichtlich Länge und Breite auf die jeweiligen Streichblechstreifen abgestimmt sind.

Weiter sieht die Erfindung vor, dass die Keramiksegmente mit Folie zu Keramikmatten zusammenfassbar ausgebildet sind. Diese Keramikmatten sind als Mosaikmatten ausgebildet, die einfach so zugeschnitten werden können, dass sie ohne weitere Nachbearbeitung auf die Streichblechstreifen aufgeklebt werden können. Beim Zuschneiden muss nur das Trägermaterial bzw. das Mattenmaterial durchtrennt werden, jedoch nicht die harten Keramiksegmente. Die Keramikmatten entsprechen in ihren Abmessungen den Abmessungen der jeweiligen Streichblechstreifen. So vorgefertigt können sie äußerst schnell in der Produktion auf die Streichblechstreifen aufgeklebt werden und behindern nicht den Fertigungs- und Montageablauf.

Die Erfindung sieht weiter vor, dass die Streichblechkante Stoßkanten bzw. Ansätze aufweist, die mit den rechtwinkeligen Enden der Strechblechstreifen korrespondieren. Durch diese Stoßkanten und Ansätze an den Streichblechkanten wird sichergestellt, dass ein glatter Übergang zwischen Streichblechstreifen und Streichblechkante entsteht, und zwar angepasst an die rechtwinkeligen Enden der Streichblechstreifen.

Durch die Belassung bewusst enger Spalten zwischen den Keramiksegmenten verbleibt den Keramikmatten eine ausreichende Beweglichkeit beim Verarbeiten und Verkleben mit den Streichblechstreifen.

Insgesamt sind so Streichblechstreifen für Pflugkörper geschaffen, bei denen mit geringem Aufwand ein wirtschaftliches Verschleißverhalten sichergestellt ist, die hohe Standzeiten aufweisen und die einfach herzustellen sind. Durch das Anpassen der Länge und Breite der Streichblechstreifen an vorhandene Keramiksegmentgrößen wird ein teures Zuschneiden der Keramiksegmente vermieden. Das Anpassen der Keramiksegmente bei ihrer Herstellung an vorhandene Streichblechstreifenumrisse reduziert den Arbeitsaufwand bei der Herstellung der Pflugkörper entsprechend. Die Montage wird weiter durch die Bildung und Verwendung von Keramikmatten wesentlich vereinfacht.

Weitere Einzelheiten und Vorteile des Erfindungsgegenstandes ergeben sich aus der nachfolgenden Figurenbeschreibung und den zugehörigen Zeichnungen in denen die notwendigen Einzelheiten dargestellt sind. Es zeigen:
- Figur 1: einen Pflugkörper in Draufsicht,
- Figur 2: eine Draufsicht auf die Landseite eines Pflugkörpers und
- Figur 3: eine Keramikmatte vor der Montage.

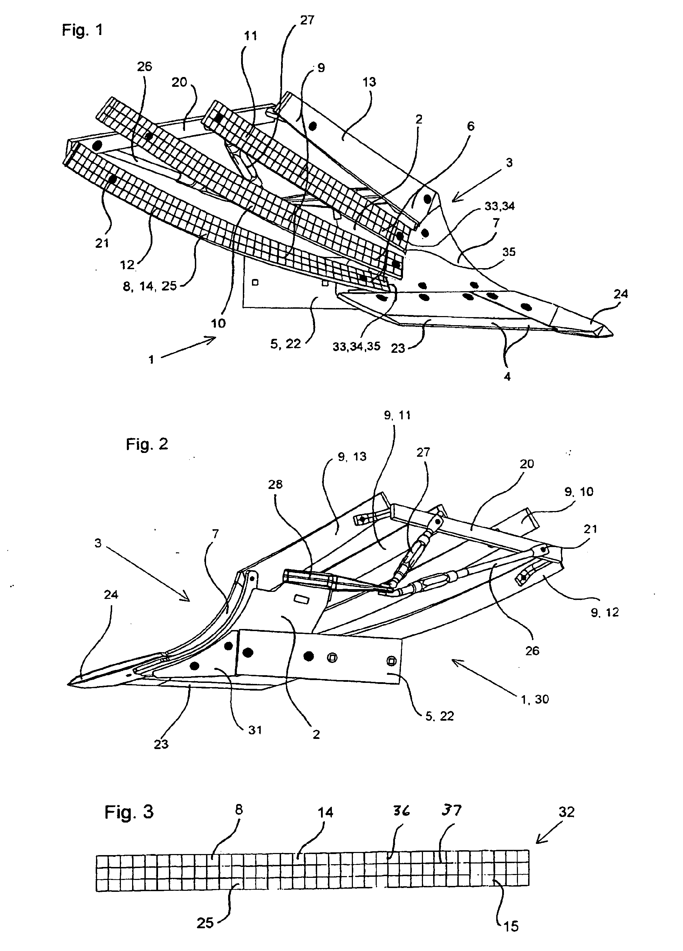

Die Figur 1 zeigt eine Draufsicht auf einen Pflugkörper 1, und zwar auf die Arbeitsfläche 6 des Streichbleches 3. Der Pflugkörper 1 weist einen Körperrumpf 2 auf, der neben dem Streichblech 3 das Schar 4 und die Streichblechkante 7 aufnimmt. Der Pflugkörper 1 weist auch Mittel für die Aufnahme von seitlichen Führungsmitteln 5 auf, und zwar für die Anlage 22.

Das Streichblech 3 ist mehrteilig ausgebildet und besteht hier aus vier Streichblechstreifen 9, und zwar dem unteren Streifen 12, dem oberen Streifen 13, dem unteren mittleren Streifen 10 und dem oberen mittleren Streifen 11. Die Streichblechstreifen 10, 11 und 12 weisen rechtwinkelige Enden 35 auf. Die Streichblechkante 7 weist Ansätze 34 auf, die im Bereich der Stoßkante 33 mit den rechtwinkeligen Enden 35 der Streichblechstreifen 10, 11, 12 korrespondieren. Die unteren drei Streifen 10, 11 und 12 sind mit einer Keramikschicht 25 versehen. Die Keramikschicht 25 besteht aus Keramiksegmenten 8. Die Keramiksegmente 8 sind hier ausschließlich als rechteckige Keramiksegmente 14 wiedergegeben.

Die einzelnen Streichblechstreifen 10, 11, 12 sind mittels Befestigungsschrauben 21 mit einer Verstrebung 20 verbunden, die die einzelnen Streichblechstreifen 10, 11, 12 in Position hält. Die Verstrebung 20 wird wiederum über eine untere Streichblechstütze 26 und eine obere Streichblechstütze 27 am Körperrumpf 2 über das Stützteil 28 abgestützt. Die Anordnung des Stützteils 28 ist insbesondere der Figur 2 zu entnehmen.

Vorne am Körperrumpf 2 ist das Schar 4 angeordnet, das aus einer Scharspitze 24 und einem Scharblatt 23 besteht.

Die Figur 2 zeigt eine Draufsicht auf die Landseite 30 des Pflugkörpers 1. Sie verdeutlicht insbesondere, wie die einzelnen Streichblechstreifen 9 mit der Verstrebung 20 verbunden sind und wie die Verstrebung 20 über eine untere Streichblechstütze 26 und eine obere Streichblechstütze 27 über das Stützteil 28 am Körperrumpf 2 abgestützt ist. Am Körperrumpf 2 ist als Führungsmittel 5 eine Anlage 22 vorgesehen. Vor der Anlage 22 ist ein Schutzkeil 31 angeordnet, der die Lücke zwischen der Scharspitze 24 und der Anlage 22 schließt.

Die Figur 3 zeigt eine einteilige Keramikmatte 32, die aus Keramiksegmenten 8 oder aus Gruppen 19 von Keramiksegmenten 8, 14 besteht, die über eine Folie 15 zusammen gehalten werden. Die Breite und Länge einer Keramikmatte 32 entspricht der Breite und Länge des jeweiligen Streichblechstreifens 9.

Die einzelnen Keramiksegmente 8, 14 sind so auf die Folie 15 aufgebracht, dass sie dicht an dicht positioniert sind, ohne ihre begrenzte Beweglichkeit gegeneinander zu beschränken. So können sie jeweils ohne Probleme auf den Streichblechstreifen 10, 11, 12, 13 aufgelegt und verklebt werden. Die verbleibenden Spalten 36, 37 setzen sich mit Erdreich zu oder werden durch geeignetes Material bei der Montage verschlossen.

## Patentansprüche

1. Pflugkörper (1) mit einem Streichblech (3) mit einer Arbeitsfläche (6), einem Körperrumpf (2), einem Schar (4) und seitlichen Führungsmitteln (5), wobei das mehrteilig ausgebildete und mindestens aus einer Streichblechkante (7) und mindestens drei Streichblechstreifen (9) bestehende Streichblech (3) zum Teil mit Keramikplättchen beschichtet ist,
**dadurch gekennzeichnet,**
dass die Arbeitsfläche (6) mindestens eines Streichblechstreifens (9,; 11; 12) ganz mit einer dessen Kontur entsprechender Keramikschicht (25) versehen ist wozu die Keramikschicht (25), die aus mosaikförmig zueinander angeordneten einzelnen Gruppen (19) aufklebbarer Keramiksegmente (8, 14) besteht, mit ihren Keramikelementen (8, 14)auf einer Folie (15) sortiert und geordnet angeordnet und mit der Seite, die der Folie (15) gegenüberliegt, auf den jeweiligen Streichblechstreifen (9, 11, 12) aufklebbar oder auftragbar ausgebildet ist.

2. Pflugkörper nach Anspruch 1,
**dadurch gekennzeichnet,**
**dass** vier Streichblechstreifen (9) vorgesehen sind und mindestens die drei unteren Streichblechstreifen (10, 11, 12) mit Keramiksegmenten (8) versehen sind.

3. Pflugkörper nach Anspruch 1,
**dadurch gekennzeichnet,**
dass sowohl die Streichblechstreifen (9, 11, 12) als auch die Keramiksegmente (8, 14) rechteckig und die Streichblechstreifen (9, 11, 12) hinsichtlich der Breite und Länge um ein Mehrfaches breiter und länger als die Keramiksegmente (8, 14) ausgebildet sind.

4. Pflugkörper nach Anspruch 1,
**dadurch gekennzeichnet,**
dass die Keramiksegmente (8, 14) mit Folie (15) zu Keramikmatten (32) zusammenfassbar ausgebildet sind.

5. Pflugkörper nach Anspruch 1,
**dadurch gekennzeichnet,**
**dass** die Streichblechkante (7) Stoßkanten (33) bzw. Ansätze (34) aufweist, die mit den rechtwinkeligen Enden (35) der Streichblechstreifen (10, 11, 12, 13) korrespondieren.

6. Pflugkörper nach einem der vorhergehenden Ansprüche,
**dadurch gekennzeichnet,**
**dass** die Keramiksegmente (8) dicht an dicht unter Belassung vorgegebener Spalten (36, 37) auf die Folie (15) aufgelegt und damit verbunden sind.

## Claims

1. Plough body (1) with a mould board (3) with a work surface (6), a plough body (2), a share (4) and side guides (5), whereby the mould board (3), which is formed in multiple parts and consists of at least one shin (7) and at least threei slats (9), is coated in part with ceramic platelets,
**characterised in that**
the work surface (6) of at least one slat (9; 11; 12) is fitted completely with a ceramic layer (25) corresponding to its contour (25) for which purpose the ceramic layer (25), which consists of individual groups) (19) of adhesive ceramic segments (8, 14) that are arranged in a mosaic shape, is sorted and arranged with its ceramic elements (8, 14) on a foil (15) and is designed to be adhered to or coated on the respective slat (9, 11, 12) with the side opposite to the foil (15).

2. Plough body in accordance with Claim 1,
**characterised in that**
four slats (9) are provided and at least the three bottom slats (10, 11, 12) are fitted with ceramic segments (8).

3. Plough body in accordance with Claim 1,
**characterised in that**
both the slats (9, 11, 12) and the ceramic segments (8, 14) are rectangular and with regard to the width and length the slats (9, 11, 12) are designed several times wider and longer than the ceramic segments (8, 14).

4. Plough body in accordance with Claim 1,
**characterised in that**
the ceramic segments (8, 14) are formed to be combined with foil (15) into ceramic mats (32).

5. Plough body in accordance with Claim 1,
**characterised in that**
the shin (7) has impact edges (33) or lips (34) respectively that correspond to the rectangular ends (35) of the slats (10, 11, 12, 13).

6. Plough body in accordance with one of the above Claims,
**characterised in that**
the ceramic segments (8) are placed close together on the foil (15) leaving given gaps (36, 37) and are joined to it in this way.

## Revendications

1. Corps de charrue (1) pourvu d'un versoir (3) avec une surface de travail (6), un sep de charrue (2), un soc (4) et des moyens de guidage latéraux (5), sachant que le versoir (3) constitué de plusieurs pièces, d'au moins un bord de versoir (7) et au moins trois bords de versoir (9) est revêtu en partie de plaquettes en céramique,
**caractérisé par le fait**
que la surface de travail (6) d'au moins un bord de versoir (9 ; 11 ; 12) est entièrement pourvue d'une couche de céramique (25) correspondant à son contour, sachant que la couche de céramique (25), qui consiste en groupes (19) individuels de segments de céramique (8, 14) pouvant être collés et disposés les uns par rapport aux autres pour former une mosaïque, avec ses éléments en céramique (8, 14) disposés triés et ordonnés sur un film (15), est conçue pour pouvoir être collée ou appliquée sur les différents bords du versoir (9, 11, 12).

2. Corps de charrue selon la revendication 1,
**caractérisé par le fait**
que quatre bords de versoir (9) sont prévus et qu'au moins les trois bords de versoir inférieurs (10, 11, 12) sont pourvus de segments de céramique (8).

3. Corps de charrue selon la revendication 1,
**caractérisé par le fait**
que tant les bords de versoir (9, 11, 12) que les segments de céramique (8, 14) ont été réalisés dans une forme carrée, et que les bords de versoir (9, 11, 12) sont, en termes de largeur et de longueur, plusieurs fois plus grands et plus longs que les segments de céramique (8, 14).

4. Corps de charrue selon la revendication 1,
**caractérisé par le fait**
que les segments de céramique (8, 14) sont formés avec le film (15) de manière à pouvoir être rassemblés en tapis de céramique (32).

5. Corps de charrue selon la revendication 1,
**caractérisé par le fait**
que le bord de versoir (7) présente des bords de contact (33) ou des épaulements (34) qui correspondent aux extrémités (35) à angle droit des bords de versoir (10, 11, 12, 13).

6. Corps de charrue selon une des représentations précédentes,
**caractérisé par le fait**
que les segments de céramique (8) sont posés étroitement les uns par rapport aux autres, en laissant les interstices (36, 37) prescrits, sur le film (15) en étant ainsi reliés.
